**Europäisches Patentamt**

**European Patent Office**

**Office européen des brevets**

(19)

(11) Publication number : **0 336 049 B1**

## (12) EUROPEAN PATENT SPECIFICATION

(45) Date of publication of patent specification :
**15.04.92 Bulletin 92/16**

(51) Int. Cl.⁵ : **F16J 15/12**

(21) Application number : **88830151.2**

(22) Date of filing : **08.04.88**

(54) **Graphite gasket for cylinder heads of internal combustion engines.**

(43) Date of publication of application :
**11.10.89 Bulletin 89/41**

(45) Publication of the grant of the patent :
**15.04.92 Bulletin 92/16**

(84) Designated Contracting States :
**AT BE DE ES FR GB IT SE**

(56) References cited :
**DE-U- 8 423 563**
**FR-A- 2 053 829**
**GB-A- 2 182 985**
**US-A- 2 084 054**
**US-A- 4 705 278**

(73) Proprietor : **TAKO S.p.A.**
**via Reiss Romoli 122/8**
**I-10148 Torino (IT)**

(72) Inventor : **Martini, Gino**
**via Trento 34**
**13051 Biella (Vercelli) (IT)**

(74) Representative : **Spandonari, Carlo**
**corso Re Umberto 56**
**I-10128 Torino (IT)**

## Description

This invention relates to a gasket based on flexible, lamellar graphite for cylinder heads of internal combustion engines, and to a method for the manufacture thereof.

As well known, there is a widespread trend today to reduce or dispense with the use of asbestos in civilian applications, because of its considerable harmfulness to health. Among the materials considered for replacement of asbestos in cylinder head gaskets, flexible graphite has been recognized as being particularly advantageous because of its qualities of heat resistance and uniformity of elasticity. While the elasticity of graphite is inferior to the one of asbestos at ambient temperature, at the engine's high working temperatures, for which asbestos' elasticity decays, graphite by contrast maintains its elastic properties, such that it is finally superior to asbestos.

However, graphite's lamellar or stratified structure, resulting from its hexagonal crystallography, creates a strong molecular bond in a direction longitudinal to the hexagonal structure, and a much weaker bond in a transverse direction. Consequently, the plate of flexible graphite is highly vulnerable to mechanical stresses, and more generally to a physico-chemical attack, in a direction parallel to its layers: graphite will easily flake and erode, particularly at the holes and apertures crossing the graphite plate and which are accessible to hot fluids of various nature, as is the case in cylinder head gaskets.

Moreover, the vulnerability of the plate to flaking and erosion increases with increasing thickness of the plate, and this puts a limit on the practically feasible plate thickness. Such thickness is remarkably thinner than the asbestos sheets usually used in cylinder head gaskets. This conventional thickness for gaskets not requiring head retightening is (in Europe) in the range 1.6 to 1.95 mm, while the typical thickness of flexible graphite plates is 1.0 mm, and the maximum thickness is probably 1.2 mm or 1.3 mm at the most.

These drawbacks have strongly limited use of graphite in cylinder head gaskets, in spite of its otherwise remarkable properties. In particular, in practical applications flexible graphite cannot be used as a direct replacement of gaskets for installation in conventional engines, but rather can nowadays only be adopted in newly designed engines. Even for these, however, only small-thickness gaskets can be made. These, for equal percent elasticity, show an absolute elastic thickness variation that is smaller than the one obtained with conventional thicknesses. It should be further considered that with small thicknesses the yield stress is more readily reached, with consequent further reduction of the gasket performane.

In order to obtain gaskets that are thicker than the constituting plates, US-A-4 705 278 describes a gasket where two plates of material are coupled with interleaving of a metal sheet having tangs extending from the sheet plane. Such a technique, that was also used with asbestos gaskets, traditionally uses metal sheets punched with irregularly jagged metal burrs. However, because of the above mentioned effect of increased flaking of graphite with increasing plate thickness, US-A-4 705 278 also embeds the metal-graphite package in a thin metal foil, since the gasket would otherwise still be vulnerable to erosion. Even the gasket of US-A-4 705 278, however, does not appear to be easily obtainable in the thicknesses required for replacement of conventional asbestos gaskets.

The main object of this invention is therefore to provide a cylinder head gasket made of flexible graphite that overcomes such drawbacks of the prior art, both with respect to lateral resistance to physico-chemical and mechanical attack and with respect to thickness.

Another object is to provide a flexible graphite gasket having a thickness such that the gasket can be used as a direct replacement for conventional gaskets having a thickness of up to 2 mm and more.

The invention is substantially based on the recognition that the "lateral" resistance of lamellar graphite is increased if the graphite plate is compressed, presumably because of the molecules are brought closer to each other in a direction transverse to the hexagonal crystals, due to the compression. Based on such recognition, the invention has developed a method for generating a permanent compression in at least a substantial portion of the graphite forming in the gasket.

Therefore, the invention achieves the above objects, as well as other objects and advantages such as will appear form the following disclosure, by providing a flexible graphite gasket for cylinder heads of internal combustion engines of the type having a method sheet core, characterized in that it comprises at least three juxtaposed graphite plates, an intermedaite graphite plate being substantially thicker than the outside graphite plates, each plate being less than 1.3 mm thick, interleaved with at least two metal sheets having pairs of parallel tangs obtained by punching H-shaped windows in the metal sheet, the tangs being alternately bent in opposite directions with respect to the plane of each metal sheet, and extending at an oblique angle into the adjacent graphite plates.

A preferred embodiment of the invention will now be described, by way of non limiting example, with reference to the attached drawings, wherein:

Fig. 1 is a cross-sectional view of a metal sheet used in a graphite gasket according to a preferred embodiment of the invention;

Fig. 2 is a plan view of the same metal sheet; and

Fig. 3 is a cross sectional view of a three-layered graphite gasket, according to a preferred embodiment of the invention.

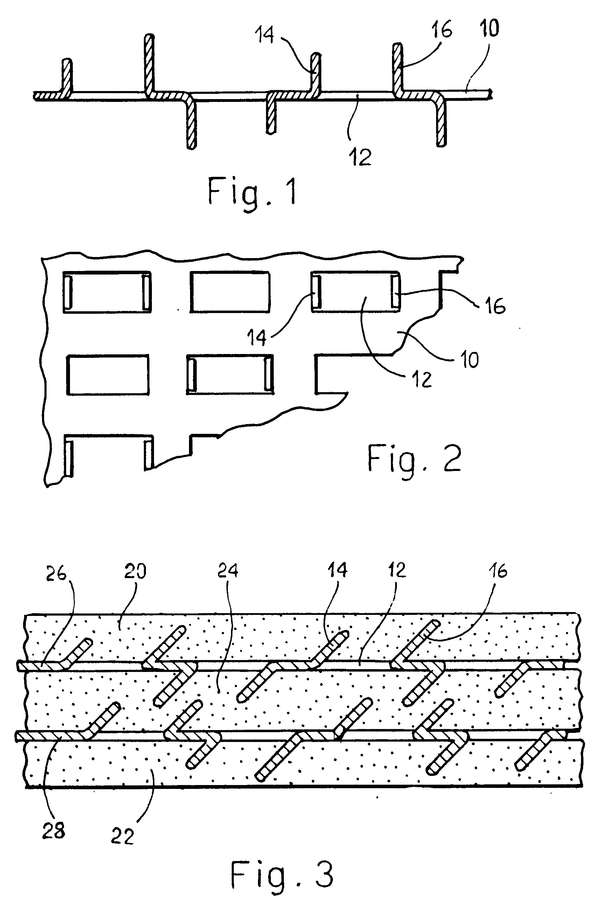

With reference to Figg. 1 and 2, an iron sheet 10, of about 0.2 mm thickness is punched with a regular pattern of H-shaped windows 12, giving rise to pairs of opposite tangs or tabs such a 14, 16, bent at 90° in opposite directions in adjacent windows, to obtain a structure as shown on Fig. 1 (where, for clarity's sake, only a row of tangs has been illustrated). The typical size of each window 12 is about 1 mm x 2 mm, in a rectangular pattern at intervals of about 1 mm in either orthogonal direction. The tangs obtained at each window may be of different length.

With reference to Fig. 3, two plates of flexible graphite 20, 22, each of about 0.4 mm thickness, are coupled to the opposite faces of a flexible graphite plate 24, of about 1.0 mm thickness, with interleaving of respective metal sheets 26, 28, made as shown in Figg. 1 and 2, and with subsequent calendering of the resulting stack to drive the tangs of the metal sheet into the graphite. In the calendering process, the material of the stack is compressed, and the tangs or tabs 14, 16 are forced to an oblique arrangement in direction of feeding of the stack between the rolls. Such oblique arrangement results in a firm clinching between the graphite plates and the metal sheets. Such clinching maintains the intermediate plate 24 compressed, even after removal of the calendering pressure. The multilayer material thus obtaines is then sheared and rimmed in a conventional manner to obtain a cylinder head gasket, as is well known for asbestos gaskets.

The gasket obtained as disclosed above is thus characterized by an intermediate graphite plate, which is maintained compressed by the obliquely arranged tangs, and which is therefore more resistant to physico-chemical attack, and by two thin, uncompressed plates, which inherently have a good resistance, due to the small thickness. Such result can only be obtained by using parallel tangs or tabs, which are capable of taking an orderly, oblique disposition and clinch the graphite as disclosed above. Such compression effect was not available with prior art metal sheets, where the layout of the punched burrs was random, so that the subsequent compression could not give rise to a true clinching.

Although in the preferred example a stack of three graphite plates of uneven thicknesses is envisaged, it is obvious that the advantages of the invention can be at least partly achieved also if the plates are of equal thickness. Moreover, the H-shaped windows from which the pairs of opposite bent tangs are obtained can be replaced, with equivalent results, with C-shaped windows, from which single bent tangs are obtained. These and other changes to the preferred example described above should be considered included in the scope of the invention.

## Claims

1. A flexible graphite gasket for cylinder heads of internal combustion engines of the type having a metal sheet core, characterized in that it comprises at least three juxtaposed graphite plates (20, 22, 24) an intermediate graphite plate (24) being substantially thicker than the outside graphique plates (20, 22), each being less than 1.3 mm thick, interleaved with at least two metal sheets (10, 26, 28) having pairs of parallel tangs (14, 16) obtained by punching H-shaped windows (12) in the metal sheet, the tangs being alternately bent in opposite directions with respect to the plane of each metal sheet, and extending at an oblique angle into the adjacent graphite plates.

2. The flexible graphite gasket of claim 1, characterized in that each graphite plate is less than 1.0 mm thick.

3. The flexible graphite gasket of claim 1, charaterized in that the intermediate graphite plate is 1.0 mm thick and the outside graphite plates are 0.4 mm thick.

## Patentansprüche

1. Zylinderkopfdichtung aus flexibler Graphit für Verbrennungsmotoren, von der Art mit einem Blechkern, dadurch gekennzeichnet, daß sie zumindest drei übereinanderliegende Graphitplatten (20, 22, 24) umfaßt, wobei eine zwischenliegende Graphitplatte (24) wesentlich dicker als die außenseitliche Graphitplatten (20, 22) ist, und wobei jede minder als 1,3 mm dick ist, und daß sie weiter zumindest zwei mit den Graphitplatten zwischengeschaltete Bleche (10, 26, 28) umfaßt, die mit Paaren von parallelen, durch Stanzen von H-förmigen Öffnungen (12) im Blech gebildeten Zinken (14, 16) versehen sind, wobei die Zinken abwechselnd in Gegenrichtungen von der Ebene jedes Bleches herausgebogen sind, und schräg in den anliegenden Graphitplatten hineinragen.

2. Dichtung aus flexibler Graphit nach Anspruch 1, dadurch gekennzeichnet, daß jede Graphitplatte minder als 1,0 mm dick ist.

3. Dichtung aus flexibler Graphit nach Anspruch 1, dadurch gekennzeichnet, daß die zwischenliegende Graphitplatte 1,0 mm dick ist, und die außenseitliche Graphitplatten 0,4 mm dick sind.

## Revendications

1. Joint de culasse en graphite flexible pour moteur à combustion interne, du genre comprenant un noyau en tôle métallique, caractérisé en ce qu'il comprend au moins trois plaques de graphite superposées (20, 22, 24), une plaque de graphite intermédiaire (24) étant substantiellement plus épaisse que les plaques de graphite extérieures (20, 22) et chacune ayant moins de 1,3 mm d'épaisseur, et intercalées avec au moins deux tôles (10, 26, 28) munies de paires d'ergots parallèles (14, 16) obtenus en poinçonnant des fenêtres en H (12) dans la tôle, les ergots étant repliés tour à tour en directions opposées par rapport au plan de chaque tôle, et s'étendant dans les plaques de graphite adjacentes suivant un angle oblique.

2. Joint en graphite flexible selon la revendication 1, caractérisé en ce que chaque plaque de graphite a une épaisseur de moins de 1,0 mm.

3. Joint en graphite flexible selon la revendication 1, caractérisé en ce que la plaque de graphite intermédiaire a une épaisseur de 1,0 mm et les plaques de graphite extérieures ont une épaisseur de 0,4 mm.

Fig. 1

Fig. 2

Fig. 3